## Europäisches Patentamt
## European Patent Office
## Office européen des brevets

(19)

(11) Veröffentlichungsnummer : **0 068 518**
**B1**

(12) **EUROPÄISCHE PATENTSCHRIFT**

(45) Veröffentlichungstag der Patentschrift :
19.12.84

(51) Int. Cl.³ : **C 04 B 35/52**

(21) Anmeldenummer : **82200406.5**

(22) Anmeldetag : **01.04.82**

(54) **Verfahren zur Herstellung von Kohlenstofformkörpern aus Koks ohne zusätzliches Bindemittel.**

(30) Priorität : **25.06.81 DE 3124951**

(43) Veröffentlichungstag der Anmeldung :
**05.01.83 Patentblatt 83/01**

(45) Bekanntmachung des Hinweises auf die Patenterteilung : **19.12.84 Patentblatt 84/51**

(84) Benannte Vertragsstaaten :
**CH DE FR GB IT LI NL**

(56) Entgegenhaltungen :
**FR-A- 1 463 177**
**US-A- 3 309 437**

(73) Patentinhaber : **Rütgerswerke Aktiengesellschaft**
**Mainzer Landstrasse 217**
**D-6000 Frankfurt a.Main 1 (DE)**

(72) Erfinder : **Stolzenberg, Konrad, Dr.**
**Bahnhofstrasse 26**
**D-4355 Waltrop (DE)**
Erfinder : **Glaser, Herbert**
**Schürenkampstrasse 22**
**D-4390 Gladbeck (DE)**
Erfinder : **Marrett, Rolf**
**Eichenweg 17**
**D-4620 Castrop-Rauxel (DE)**

Jouve, 18, rue St-Denis, 75001 Paris, France

EP 0 068 518 B1

## Beschreibung

Die Erfindung betrifft ein Verfahren zur Herstellung von Kohlenstofformkörpern aus Koks, bei denen bei der Herstellung auf die Verwendung von zusätzlichem Bindemittel verzichtet wird.

Solche Formkörper finden beispielsweise im Apparatebau, im Reaktorbau, in der Stahlerzeugung als Elektroden und bei elektrochemischen Prozessen als Anoden und Kathoden Verwendung.

Bei den gewöhnlich angewendeten industriellen Verfahren zur Herstellung von Kohlenstofformkörpern werden Mischungen aus Graphit oder Kohle- bzw. Koksteilchen und einem Bindemittel hergestellt. Als Bindemittel werden im allgemeinen Steinkohlenteerpeche verwendet. Die Menge der Bindemittelzusätze richtet sich nach dem angewendeten Formverfahren und beträgt beim Strangpreßverfahren 20 %-25 % bzw. beim Gesenkpreßverfahren kommt man mit geringeren Bindemittelanteilen aus.

Als Einsatzstoff wird im allgemeinen ein kalzinierter Koks eingesetzt, der in einem Horizontalkammerofen oder in einem Delayed Coker mit anschließender Kalzinierung hergestellt wird.

Die teilweise grobstückig anfallenden Kohlenstoff- und Graphitkörner werden zerkleinert und klassiert. Die Fraktionen werden entsprechend einer gewünschten Rezeptur gemischt. Für große Formate werden Körnungen bis 15 mm verwendet, bei kleineren Körpern arbeitet man zum Teil mit maximalen Korngrößen von nur 25 $\mu$m. Auch wird in manchen Fällen mit einer Sekundärtechnologie gearbeitet, bei der sehr feine Primärkörner mit Bindemitteln versetzt und gebrannt werden und dann sekundär zu einer größeren Körnung aufgemahlen werden.

Zum Mischen eignen sich beheizte, langsam laufende Knetmischer oder schnell laufende Paddelmischer. Die Mischendtemperatur beträgt je nach Erweichungspunkt des Bindemittels 120 °C bis 180 °C. Am Ende des Mischvorganges oder zum Teil erst während der Kühlung wird ein Preßhilfsöl zugesetzt.

Aus diesen Mischungen werden Formen nach den üblichen Formgebungsverfahren wie Strangpressen, Gesenkpressen, Rammen, Rütteln oder Stampfen hergestellt. Der Preßdruck beim Strangpressen beträgt 10 bis 20 N/mm², beim Gesenkpressen 100 N/mm² bis 200 N/mm². Beim Strang- und Gesenkpressen richten sich in Mischungen mit anisotropen Körnern, wie Nadelkoksen, die einzelnen Partikel je nach Schlankheitsgrad mehr oder weniger gut aus, beim Strangpressen in Preßrichtung, im Gesenk senkrecht zur Preßrichtung. Beim isostatischen Pressen erfolgt die Krafteinwirkung von allen Seiten und führt auch bei nadeligen oder plättchenförmigen Teilchen zu quasiisotropen Preßkörpern, vorausgesetzt, daß beim Füllen der Form keine Ausrichtung der Körner erfolgt.

Rüttelanlagen werden für die Herstellung von Elektroden für die Aluminiumelektrolyse verwendet. Man arbeitet mit 1 500 bis 3 000 Schwingungen in der Minute. Die Mischung aus Kohlenstoff- oder Graphitkörnern und Bindemitteln wird im allgemeinen heiß eingerüttelt. Beim Rammen (Jar molding) schlägt die Form etwa 80 mal pro Minute während des Füllvorgangs hart auf. Die Verdichtung erfolgt im allgemeinen bei Temperaturen, die 25 K über dem Erweichungspunkt des Bindemittels, d. h., in seinem kritischen Adhäsionsbereich liegen.

Bei dem anschließenden Brennvorgang wird das zugegebene Bindemittel in reduzierender oder inerter Atmosphäre verkokt. Zum Graphitieren werden die grünen Formlinge in elektrischen Widerstandsöfen auf etwa 2 700 °C erhitzt und dadurch in Elektrographit umgewandelt. Zur Erhöhung der Rohdichten sowie der mechanischen und elektrischen Eigenschaften werden die Formlinge nach dem Kalzinieren, dem Graphitieren oder der mechanischen Bearbeitung imprägniert. Hierzu werden Harze oder Peche mit einem Erweichungspunkt um 60 °C (nach Kraemer-Sarnow) und geringem Anteil an hochmolekularen Bestandteilen (ca. 3 % Chinolinunlösliches) verwendet. Der Imprägniervorgang wird mehrfach wiederholt, bis der Formkörper die geforderte Dichte und die gewünschten elektrischen und mechanischen Eigenschaften aufweist.

Neben den allgemein angewendeten Verfahren zur Herstellung von Kohlenstofformkörpern unter Zugabe von Bindemitteln sind auch Verfahren bekannt, bei denen auf die Zugabe von zusätzlichen Bindemitteln verzichtet wird. Ein Verfahren zur Herstellung von Kohlenstofformkörpern verwendet Hartpech (Erweichungspunkt > 170 °C), das aus Steinkohlenteerpech oder ähnlichen Materialien durch Destillation, Oxidation in Luft oder durch Chlorierung hergestellt worden ist. (Tanso 1968, Nr. 52, 13-17). Das modifizierte Pech wird unter Zugabe von Wasser oder Äthylalkohol in einer Kugelmühle gemahlen und gemischt. Der erhaltene Schlicker wird in Gipsformen gefüllt. Nach einer Absitzzeit von einigen Minuten läßt man der überschüssigen Schlicker ablaufen. Die an der Innenwand der Gipsform abgelagerte Schicht aus dem modifizierten Pech zieht sich allmählich zusammen und löst sich von der Form ab. Das erhaltene Erzeugnis wird aus der Gipsform entnommen, getrocknet und anschließend gebrannt. Zur Erzielung einer hohen Verdichtung wird ferner für die Formung der Kohlenstoffkörper das Gießformpreßverfahren mit Drücken von 100 N/mm² und höher angewendet. Das Ausgangsmaterial besitzt von sich aus sowohl die Eigenschaften eines Schmiermittels als auch die eines Bindemittels. Nach diesem Verfahren ist zwar die Herstellung von Kohlenstofformkörpern ohne die Verwendung von zusätzlichem Bindemittel und ohne die Anwendung von äußeren Drücken möglich, es lassen sich jedoch nur Formkörper mit relativ kleinen Abmessungen bzw. dünnwandige Formkörper mit 1-5 mm Wandstärke herstellen. Wandstärken von 1-2 cm Dicke lassen sich nur unter Anwendung von Drücken nach dem Gießformverfahren herstellen.

Ein anderes Verfahren verwendet zur Herstellung von Kohlenstofformkörpern extrahierte Mesopha-

2

0 068 518

se (GB-A-1 416 573). In einem auf 430 °C erhitzten Pech werden Mesophasenkügelchen gezüchtet. Zur Abtrennung der Mesophase vom Pech wird wiederholt mit Chinolin gewaschen und zentrifugiert. Schließlich wird die gewonnene Mesophase mit Benzol gewaschen, wobei das Benzol abfiltriert wird. Die so gewonnene Mesophase enthält weniger als 10 % Gew. nicht umgewandeltes Pech. Die Mesophase wird in Formen gefüllt und zur Verdichtung unter einem Druck von 100 N/mm² gepreßt. Die spezifische Rohdichte der Formlinge beträgt nach dem Pressen 1,25 g/cm³, nach dem Kalzinieren bei 1 000 °C beträgt sie 1,63 g/cm³ und nach dem Graphitieren bei 2 800 °C schließlich 1,78 g/cm³. Für die Abtrennung von 10 g Mesophase aus dem temperaturbehandelten Pech sind nach diesem Verfahren etwa 400 g Chinolin notwendig, um in der Mesophase den nicht umgewandelten Pechanteil unter 10 % Gew. zu senken. Die Aufarbeitung des Chinolins ist mit erheblichen Kosten verbunden. Zwar lassen sich nach diesem Verfahren Formkörper von hoher Dichte und hoher Druckfestigkeit ohne die Verwendung von zusätzlichem Bindemittel herstellen, jedoch sind aufgrund der hohen Drücke beim Verdichten nur Kohlenstofformkörper mit kleinen geometrischen Abmessungen herstellbar.

Nach einem anderen Verfahren (DE-A-2 035 395) wird zur Herstellung von dichten Kunstkohlen eine schmelzbare kohlenstoffhaltige Verbindung auf 500 °C bis 550 °C erhitzt, um einen Grünkoks mit weniger als 20 % flüchtigen Bestandteilen herzustellen. Dieser Grünkoks wird zerkleinert und zu einem Körper vorgeformt. Der vorgeformte Körper wird anschließend einer Kompression unterzogen. Hierzu wird er auf eine Temperatur gebracht, bei welcher das Ausgangsmaterial noch eine geeignete Plastizität besitzt, d. h. auf etwa 400 °C, rasch in eine zweite Form überführt, die auf Temperaturen zwischen 100 °C und 200 °C temperiert ist, und anschließend mit einem Druck zwischen 100 und 400 N/mm² beaufschlagt. Dadurch erhält man Kunstkohlen mit einer Dichte von 1,60 bis 1,65 g/cm³.

Zwar gestattet dieses Verfahren die Herstellung von Kunstkohlen mit hoher Dichte, jedoch ist es in der Anwendung wegen der hohen Drücke nur auf die Herstellung von Formkörpern mit kleinen geometrischen Abmessungen anwendbar, z. B. bei einer Zylinderform mit einem Durchmesser von 47 mm und einer Höhe von 80 mm, entsprechend 139 cm³.

Aus der US-A-3 309 437 ist ein Verfahren zur Herstellung von Formkörpern aus rohem Petrolkoks mit einem Flüchtigengehalt von 8 bis 25 % ohne Zusatz von Bindemitteln bekannt. Der auf eine Korngröße von weniger als 5 mm zerkleinerte Koks wird in Formen gefüllt, eventuell durch Vibration verdichtet und auf eine Temperatur von etwa 950 °C unter nichtoxidierenden Bedingungen aufgeheizt. Es wird darauf hingewiesen, daß die Aufheizbedingungen von der Größe und der Form des herzustellenden Gegenstandes, der Korngröße, dem Flüchtigengehalt und anderen Größen abhängig sind. Obwohl die Bedeutung der Aufheizzeit und des Temperaturgradienten offensichtlich bekannt war, wird lediglich darauf hingewiesen, daß die Aufheizung bis 400 °C sehr schnell erfolgen kann und danach für leichtere Formkörper eine Aufheizrate von 20 °C pro Stunde für viele Körper typisch sei, schwere Formkörper hingegen würden langsamer aufgeheizt. Diese Angaben sind viel zu ungenau, um daraus eine Vorschrift zum technischen Handeln ableiten zu können, wie Formkörper beliebiger Abmessung wirtschaftlich, d. h. mit möglichst kurzen Aufheizzeiten herzustellen sind.

Der Erfindung liegt die Aufgabe zugrunde, ein Verfahren zu entwickeln, nach dem es möglich ist, aus Koks ohne zusätzliche Bindemittel und ohne Anwendung von hohen Drücken Kohlenstofformkörper hoher Dichte und beliebiger Abmessung herzustellen.

Die Aufgabe wird erfindungsgemäß dadurch gelöst, daß ein Koks oder Koksgemisch mit einem gehalt an flüchtigen Bestandteilen von 5 bis 25 % auf eine Korngröße unter 1 % der Materialstärke des herzustellenden Formkörpers zerkleinert, in eine Form gefüllt und mit hoher Aufheizgeschwindigkeit auf 450 °C und anschließend langsam mit einer von der Schichtdicke S abhängigen Aufheizdauer t bis auf die Endtemperatur K von mindestens 850 °C erhitzt wird, wobei die Aufheizdauer sich aus der Gleichung

$$t = ((2 \cdot S)/42)^{1,6} \cdot (K - 450)/400$$

ergibt, wenn t in Tagen, S in mm und K in °C eingesetzt werden. Mit S wird die größte Entfernung zwischen der Formkörperoberfläche und derjenigen Symmetrieachse des Formkörpers bezeichnet, die parallel zu den Heizflächen liegt. Das Ausgangsmaterial kann eine schmelzbare, kohlenstoffhaltige Verbindung sein, z. B. Steinkohlenteerpech, Steinkohlenteer, Petropech usw., das einer Vorverkokung unterzogen wird, die z. B. nach dem Delayed Coking Verfahren dazu führt, einen Grünkoks mit einem Gehalt an flüchtigen Bestandteilen unterhalb 25 Gew.-%, vorzugsweise zwischen 8 Gew.-% und 11 Gew.-%, herzustellen. Ebenso können aus Koksen mit unterschiedlichen Gehalten an flüchtigen Bestandteilen entsprechende Mischungen hergestellt werden, so daß der Anteil an flüchtigen Bestandteilen in der Koksmischung kleiner als 25 Gew.-%, vorzugsweise zwischen 8 Gew.-% und 11 Gew.-% liegt.

Die mechanischen Festigkeitswerte sowie die Werte für den spezifischen elektrischen Widerstand der fertigen Kohlenstofformkörper werden durch die Qualitätseigenschaften des eingesetzten Grünkokses stark beeinflußt. Bei Elektrodennippeln, die als Verbindungselement für Elektroden in der Stahlindustrie Anwendung finden, ist ein geringer volumetrischer Wärmeausdehnungskoeffizient bei guter spezifischer elektrischer Leitfähigkeit erwünscht. Diese Förderung kann durch den Einsatz eines hochanisotropen Grünkokses (Nadelkoks) erfüllt werden. Für die Einsatzgebiete des Maschinen- und Apparatebaues, bei denen es weniger auf einen geringen spezifischen elektrischen Widerstand, sondern mehr auf die Werte für die mechanischen Festigkeiten ankommt, lassen sich in geeigneter Weise isotrope

3

Kokse, z. B. auch Ruße, die bei der Acetylenherstellung anfallen, einsetzen.

Der zerkleinerte Koks wird in Formen gefüllt, ohne daß zusätzliches Bindemittel verwendet wird. Gemäß einer vorteilhaften Ausführung des Verfahrens wird die Füllform während des Vorgangs des Kokseinfüllens in Schwingungen versetzt, um eine Verdichtung der Koksschüttung zu erreichen.

Um Hohlkörper herzustellen, können nach einem weiteren Anspruch des Verfahrens Kerne eingesetzt werden. Diese Kerne bestehen aus Materialien, deren Schmelz- oder Erweichungspunkt unterhalb der Verkokungsendtemperatur liegen, die jedoch im Temperaturbereich bis etwa 500 °C eine genügend hohe Festigkeit besitzen, daß sie bis zu dieser Temperatur formstabil bleiben. Eine zusätzliche Forderung an das Kernmaterial ist, daß es während des schmelzflüssigen bzw. erweichten Zustandes keine benetzende Wirkung hat. Als vorteilhafter Werkstoff kann z. B. Aluminium eingesetzt werden. Die Füllform wird zusammen mit der Koksfüllung auf die Kalziniertemperatur aufgeheizt. Bei der Verwendung von anisotropen Koksen ist eine Temperatur von 850 °C ausreichend. Die Aufheizung läßt sich in zwei Abschnitte unterteilen. Im ersten Abschnitt bis zu einer Temperatur von 450 °C wird rasch entsprechen der zur Verfügung stehenden Heizleistung aufgeheizt, vorzugsweise mit einer Aufheizgeschwindigkeit zwischen 1 K/min und 3 K/min. Im zweiten Abschnitt muß die Aufheizgeschwindigkeit in Abhängigkeit von der Formkörpergeometrie gewählt werden. Ein Maß für die Formkörpergeometrie ist die Strecke S. Sie gibt die längste Entfernung von der Formkörperoberfläche zu derjenigen Symmetrieachse des Formkörpers an, die parallel zu den Heizflächen liegt. Bei Hohlkörpern verringert sich der Betrag der Strecke um den Hohlanteil der Gesamtstrecke. Die Aufheizdauer im zweiten Abschnitt ist dann gegeben durch :

$$t = ((2 \cdot S)/a)^{1/b} \cdot (K - 450)/400$$

mit den Konstanten a = 42 und b = 0,625. Es bedeuten t die Aufheizdauer in Tagen, K die Verkokungsendtemperatur in °C und S der Betrag der Strecke in mm.

Nach dem erfindungsgemäßen Verfahren lassen sich Kohlenstofformkörper herstellen, die quasiisotrope Eigenschaften besitzen, d. h., bei Verwendung von anisotropen Koksen erhält man Formkörper, die mikroskopisch anisotrope, makroskopisch jedoch istotrope Eigenschaften zeigen. Besonders vorteilhaft ist dabei, daß die inneren Poren allesamt aus offenen Poren bestehen, da sich die Kokskörner während der Verkokung durch druckloses Versintern bzw. Brückenbildung miteinander verbunden haben, ohne geschlossene Poren bilden zu können. Hierdurch wird eine nachgeschaltete Imprägnierung wesentlich vereinfacht.

Ein weiterer Vorteil des Verfahrens ist darin zu sehen, daß durch den Verzicht auf die Zugabe von zusätzlichem Bindemittel die Gasentwicklung während des Verkokungsvorganges erheblich reduziert und dadurch die Belastung der Umwelt verringert wird.

## Beispiel 1

Steinkohlenteerpech, das durch ein geeignetes Trennverfahren von chinolinunlöslichen Bestandteilen (QI) weitgehend befreit worden ist (QI < 0,2 %), wird in der Weise verkokt, daß der entstehende hochanisotrope Grünkoks einen Gehalt an flüchtigen Bestandteilen von 8,2 % (nach DIN 51720) aufweist. Dieser Grünkoks wird zerkleinert. Es wird ein Kokspulver mit folgender Korngrößenverteilung eingesetzt :

700 μm > 500 μm =  3,7 %
500 μm > 250 μm = 17,2 %
250 μm > 100 μm = 43,6 %
100 μm >  50 μm =  6,0 %

Dieser Grünkoks wird in eine unten geschlossene Edelstahlform gefüllt.

Innendurchmesser der Form =  79 mm
Höhe der Form =           500 mm

Während des Einfüllvorganges wird die Form zusammen mit dem Inhalt in Schwingungen versetzt (250 min$^{-1}$). Man erhält eine Schüttdichte von 1,07 g/cm$^3$.

Die gefüllte Form wird senkrecht in einen Ofen (z. B. Schachtofen) gestellt und nach einem Temperaturprogramm aufgeheizt :

von  20 °C bis 450 °C = 2  K/min ; Dauer  3,6 h
von 450 °C bis 850 °C = 0,1 K/min ; Dauer 66,6 h

Anschließend wird abgekühlt (1 K/min ; Dauer 13,8 h). Der Formkörper kann in einfacher Weise aus der Metallform entnommen werden, da er sich von der Forminnenwand vollständig abgelöst hat. Man erhält Formkörper mit einem Lückenvolumen von ε = 31,7 %, einer scheinbaren Dichte von ρ = 1,24 g/cm$^3$, einer Biegefestigkeit von 10,8 N/mm$^2$ sowie einer Druckfestigkeit von 33,6 N/mm$^2$. Der volumetrische Wärmeausdehnungskoeffizient beträgt nach dem Kalzinieren (bei 1 300 °C)

$4,83 \cdot 10^{-6} K^{-1}$. Der spezifische elektrische Widerstand beträgt nach dem Graphitieren bei 2 800 °C : 19,2 $\Omega\mu m$.

### Beispiel 2

Ein entsprechend Beispiel 1 vorbehandeltes Steinkohlenteerpech wird zu hochanisotropen Grünkoksen mit Gehalten an flüchtigen Bestandteilen zwischen 5 % und 25 % verkokt, indem man die Verkokungsendtemperatur im Bereich zwischen 450 °C und 520 °C variiert. Diese Kokse werden zerkleinert und nach dem in Beispiel 1 angegebenen Verfahren zu Formkörpern verkokt.

Man erhält Kohlenstofformkörper mit unterschiedlichen Lückenvolumina.

| Lfd. Nr. | Gehalt an flüchtigen Bestandteilen | Lückenvolumen |
|----------|------------------------------------|---------------|
| 1 | 5,0 % | 44,2 % |
| 2 | 8,0 % | 31,8 % |
| 3 | 10,8 % | 34,0 % |
| 4 | 14,2 % | 41,2 % |
| 5 | 17,6 % | 52,8 % |
| 6 | 21,1 % | 64,2 % |
| 7 | 24,5 % | 74,4 % |

### Beispiel 3

Es wird eine Mischung aus zwei hochanisotropen Grünkoksen mit unterschiedlichen Gehalten an flüchtigen Bestandteilen hergestellt :

Grünkoks I : Gehalt an flüchtigen Bestandteilen :  6,0 Gew.%
Grünkoks II : Gehalt an flüchtigen Bestandteilen : 14,7 Gew.%

Die Mischung besteht aus 70 Gew.-% vom Grünkoks I und 30 Gew.-% vom Grünkoks II und hat einen mittleren Gehalt an flüchtigen Bestandteilen von 8,6 Gew.-%.

Die Verkokung zum Kohlenstofformkörper erfolgt nach der in Beispiel 1 beschriebenen Weise.

Der Formkörper hat ein Lückenvolumen von $\varepsilon = 31,5$ Gew.-%, eine scheinbare Dichte von 1,24 $g/cm^3$ und eine Druckfestigkeit von 32 $N/mm^2$.

### Beispiel 4

Eine zylindrische Form mit Boden (Werkstoff 1.4541) wird mit einem Kern versehen. Der Kern besteht ebenfalls aus einer Röhre, die aus Aluminiumblech hergestellt ist. Die Aluminiumröhre ist mittig eingebaut.

Röhre aus 1.4541  Innendurchmesser     : 100 mm
                   Länge : 500 mm
Röhre aus Aluminium  Außendurchmesser :  48 mm
                     Länge : 500 mm

Der zerkleinerte Grünkoks, der entsprechend Beispiel 1 hergestellt worden ist und einen Gehalt an flüchtigen Bestandteilen von 8,5 Gew.-% aufweist, wird in den Ringspalt zwischen der Stahlröhre und der Aluminiumröhre gefüllt. Dabei wird die Form während des Einfüllvorganges wiederum in Schwingungen versetzt (250 $min^{-1}$).

Die Aufheizung erfolgt nach folgendem Programm :

20 °C bis 450 °C = 1   K/min Dauer  7,2 h
450 °C bis 850 °C = 0,2 K/min Dauer 33,3 h

Die Abkühlung erfolgt mit einer Geschwindigkeit von 1 K/min (Dauer 13,8 h). Während des zweiten Teils der Aufheizkurve schmilzt das Aluminium, ohne den bereits verfestigten Kohlenstoffkörper zu benetzen. Anhaftende Reststücke lassen sich nach der Abkühlung leicht von der Oberfläche des Formkörpers abstoßen.

Auf diese Weise lassen sich Hohlkörper, Hohlelektroden und ähnliches mit den in Beispiel 1 angegebenen Qualitäten herstellen.

5

## Beispiel 5

Es wird aus drei Teilen Ruß und einem Teil hochanisotropem Grünkoks eine Mischung hergestellt, die einen mittleren Gehalt an flüchtigen Bestandteilen von 9,1 % Gew. aufweist. Der Ruß fällt z. B. bei der Acetylenherstellung an und hat etwa 3,8 Gew.-% flüchtige Bestandteile. Der hochanisotrope Grünkoks hat 25 Gew.-% flüchtige Bestandteile und ist durch thermische Behandlung von QI-armem Steinkohlenteer bei 450 °C hergestellt worden. Die Mischung wird nach der Zerkleinerung nach der in Beispiel 1 beschriebenen Weise zu Formkörpern verkokt.

Der bei 850 °C verkokte Formkörper hat eine Rohdichte von $\rho = 1,3$ g/cm$^3$, eine Biegefestigkeit von 16,3 N/mm$^2$, eine Druckfestigkeit von 58,6 N/mm$^2$ und nach dem Kalzinieren bei 1 300 °C einen volumetrischen Wärmeausdehnungskoeffizienten von $14 \cdot 10^{-6} \mathrm{K}^{-1}$.

## Ansprüche

1. Verfahren zur Herstellung von Kohlenstofformkörpern aus Koks mit einem Gehalt an flüchtigen Bestandteilen bis 25 % ohne zusätzliche Bindemittel und ohne zusätzliche Druckverformung durch eine zweistufige Aufheizung, dadurch gekennzeichnet, daß ein Koks oder Koksgemisch mit einem Gehalt an flüchtigen Bestandteilen von 5 bis 25 % auf eine Korngröße unter 1 % der Materialstärke des herzustellenden Formkörpers zerkleinert, in eine Form gefüllt und ohne zusätzliche Druckverformung mit hoher Aufheizgeschwindigkeit auf 450 °C und anschließend langsam mit einer von der Schichtdicke S abhängigen Aufheizdauer t bis auf die Endtemperatur K von mindestens 850 °C erhitzt wird, wobei die Aufheizdauer sich aus der Gleichung

$$t = ((2 \cdot S)/42)^{1,6} \cdot (K - 450)/400$$

ergibt, wenn t in Tagen, S in mm und K in °C eingesetzt werden, wobei S die größte Entfernung zwischen der Formkörperoberfläche und derjenigen Symmetrieachse des Formkörpers bezeichnet, die parallel zu den Heizflächen liegt ; bei Hohlkörpern verringert sich der Betrag der Strecke um den Hohlanteil der gesamtstrecke.

2. Verfahren nach Anspruch 1, dadurch gekennzeichnet, daß je nach Verwendungszweck des Formkörpers anisotrope oder isotrope Kokse bzw. deren Gemische mit einem Gehalt an flüchtigen Bestandteilen von 8-11 Gew.-% gegebenenfalls mit einem Zusatz von Ruß eingesetzt werden.

3. Verfahren nach den Ansprüchen 1 und 2, dadurch gekennzeichnet, daß der zerkleinerte Koks in eine Form gefüllt wird, die während des Füllvorgangs in Schwingungen versetzt wird.

4. Verfahren nach den Ansprüchen 1 bis 3, dadurch gekennzeichnet, daß die Aufheizgeschwindigkeit in der ersten Erhitzungsstufe bis auf 450 °C 1 bis 3 K/min beträgt.

5. Verfahren nach den Ansprüchen 1 bis 4, dadurch gekennzeichnet, daß für die Herstellung von Hohlkörpern ein Kernmaterial Verwendung findet, dessen Schmelzpunkt zwischen 500 und 850 °C liegt und das in flüssigem Zustand den Kohlenstoffkörper nicht benetzt.

6. Verfahren nach Anspruch 5, dadurch gekennzeichnet, daß als Kernmaterial Aluminium Verwendung findet.

7. Verfahren nach Anspruch 1, dadurch gekennzeichnet, daß der gebrannte Formkörper in an sich bekannter Weise imprägniert und/oder graphitiert wird.

## Claims

1. A process for the manufacture of molded carbon bodies from coke containing up to 25 % of volatile constituents without additional binding agents and without pressure molding by heating in two steps characterised by comminuting a coke or a coke mixture containing from 5 to 25 % of volatile constituents to a grain size below 1 % of the thickness of the molded body, filling the coke into a mold and heating it at a high heating rate to 450 °C without additional compressive deformation and thereafter heating slowly to the final temperature K of at least 850 °C, over a heating-up periode t, which depends on the layer thickness S and is given by the equation :

$$t = ((2 \cdot S)/42)^{1,6} \cdot (K - 450)/400$$

when t is inserted in days, S in mm and K in °C, wherein S is the largest distance between the surface of the molded body and its axis of symmetry parallel to the heating surface, which is reduced for hollow bodies by the part of the distance in the hollow space.

2. A process as claimed in claim 1 characterised by using anisotrope or isotrope cokes or mixture thereof, depending on the use of the molded body, which contain from 8 to 11 % by weight of volatile matter and occasionally added carbon black.

3. A process as claimed in the claims 1 and 2, characterised by filling a mold with the comminuted coke and vibrating the mold during the filling operation.

4. A process as claimed in the claims 1 and 3 characterised by a heating rate of 1 to 3 K/min in the first heating step up to 450 °C.

5. A process as claimed in one of the claims 1 to 4 characterised by using a core material for the manufacture of hollow bodies, which has a melting point between 500 and 850 °C and which does not wet the carbon body in the liquid state.

6. A process as claimed in claim 5 characterised by using aluminium as core material.

7. A process as claimed in claim 1 characterised by impregnating and/or graphitising the fired molded body in a known manner.

## Revendications

1. Procédé pour fabriquer des objets moulés en carbone à partir de coke sans liants supplémentaires, et sans formage supplémentaire sous pression, procédé caractérisé en ce qu'on broie un coke ou un mélange à base de coke dont la teneur en constituants volatils est comprise entre 5 et 25 %, jusqu'à une granularité inférieure à 1 % de l'épaisseur de couche de l'objet moulé à fabriquer, on introduit le produit ainsi broyé dans un moule et, sans formage supplémentaire sous pression, on chauffe rapidement jusqu'à 450 °C, puis lentement, pendant une durée t dépendant de l'épaisseur de couche S, jusqu'à une température finale K d'au moins 850 °C, la durée de chauffage étant donnée par la relation suivante :

$$t = ((2 \cdot S)/42)^{1,6} \cdot (K - 450)/400$$

dans laquelle t est exprimé en jours, S en millimètres et K en degrés Celsius, S désignant la plus grande distance entre la surface de l'objet moulé et de l'axe de symétrie de l'objet moulé qui est parallèle aux surfaces de chauffe. Dans le cas de corps creux, la valeur de la distance est diminuée de la proportion de vides de la distance totale.

2. Procédé selon la revendication 1, caractérisé en ce que, suivant l'application à laquelle l'objet moulé est destiné, on utilise des cokes anisotropes ou isotropes ou leurs mélanges dont la teneur en constituants volatils est comprise entre 8 et 11 %, le cas échéant avec addition de noir de carbone.

3. Procédé selon l'une des revendications 1 et 2, caractérisé en ce que le coke broyé est introduit dans un moule que l'on soumet à un mouvement vibratoire au cours du remplissage.

4. Procédé selon l'une quelconque des revendications 1 à 3, caractérisé en ce que la vitesse de chauffage au cours de la première étape de chauffage jusqu'à 450 °C, est comprise entre 1 et 3 K/minute.

5. Procédé selon l'une quelconque des revendications 1 à 4, caractérisé en ce que, pour fabriquer des objets creux, on utilise un noyau en une matière dont le point de fusion est compris entre 500 et 850 °C et qui, à l'état liquide, ne mouille pas d'objets en carbone.

6. Procédé selon la revendication 5, caractérisé en ce qu'on utilise de l'aluminium comme matière pour le noyau.

7. Procédé selon la revendication 1, caractérisé en ce que l'objet moulé cuit est imprégné et/ou graphitisé de manière connue.